# EUROPEAN PATENT SPECIFICATION

(11) **EP 2 070 287 B1**
(45) Date of publication and mention of the grant of the patent: **20.01.2010**
(21) Application number: 06819070.1
(22) Date of filing: 03.10.2006
(51) Int. Cl.: H04L 29/06, H04W 4/00

(54) **PROVISION OF ACCESS INFORMATION IN A COMMUNICATION NETWORK**
BEREITSTELLUNG VON ZUGANGSINFORMATIONEN IN EINEM KOMMUNIKATIONSNETZ
FOURNITURE D'INFORMATION D'ACCÈS DANS UN RÉSEAU DE COMMUNICATION

(43) Date of publication of application: 17.06.2009
(73) Proprietor: Telefonaktiebolaget LM Ericsson (publ), 164 83 Stockholm (SE)
(72) Inventor: LINDHOLM, Fredrik, S-125 74 Älvsjö (SE); TERRERO DIAZ-CHIRON, Maria Esther, E-ES-28029 Madrid (ES); ESTEBAN-VARES, Nuria, E-ES-28300 Madrid (ES)
(74) Representative: Mitchell, Matthew Benedict David
(86) International application number: PCT/EP2006/067011
(87) International publication number: WO 2008/040389

(56) References cited:
- WO-A-02/054745
- WO-A-2006/100459
- "Enable service execution in IMS based on Access Network type" IP.COM JOURNAL, IP.COM INC., WEST HENRIETTA, NY, US, 3 May 2006 (2006-05-03), XP013113975 ISSN: 1533-0001

## Description

### Field of the Invention

The present invention relates to provision of access information in an IP Multimedia Subsystem network.

### Background to the Invention

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services which are considered in more detail below.

IP Multimedia Subsystem (IMS) is the technology defined by the Third Generation Partnership Project (3GPP) to provide IP Multimedia services over mobile communication networks (3GPP TS 22.228, TS 23.218, TS 23.228, TS 24.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly.

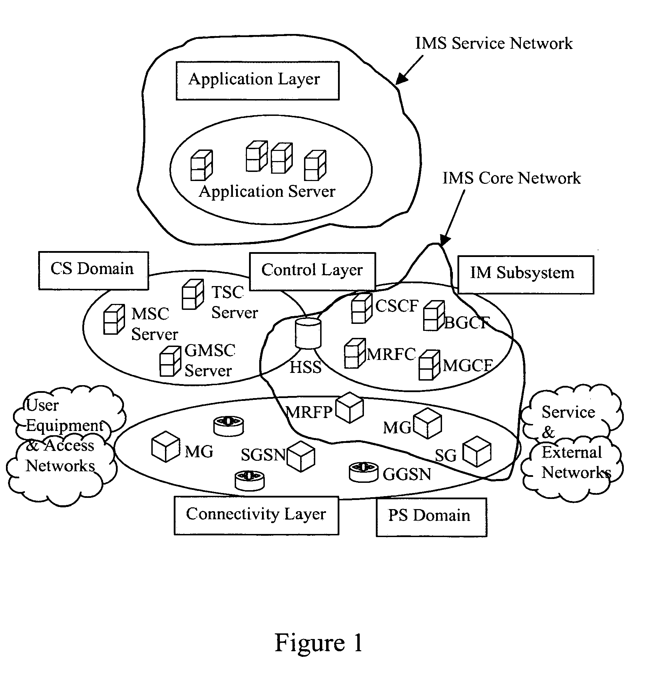

Figure 1 illustrates schematically how the IMS fits into the mobile network architecture in the case of a General Packet Radio Service (GPRS)/Packet Switched (PS) access network. Call Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF. Of course, the IMS may be accessed from other access network types, for example a Wireless Local Area Network (WLAN) network.

In some circumstances, it is desirable to provide user access information, which includes information about the technology used to access the network, and the location of the user, to a Home Subscriber Server (HSS). An example of this is where access control depends on the Access Point (AP) used to access the network. An AP may be a base station of a WLAN or a Node B of 3GPP cellular network. It may be desirable to allow operators of IMS networks to control which APs may be used to access their networks. For example, a network operator may have negotiated a special tariff with a company that depends upon the company's employees accessing the operator's IMS network only via APs of the network operator. In order to control access to a network depending on the AP used, access information must be stored in the user's profile at the HSS.

Another example of a scenario where it is desirable to provide access information to a HSS arises from Fixed Mobile Convergence (FMC). A user having a subscription to an IMS network may have multiple user identities, some of which may be used to access a network using a fixed line service and some of which may be used to access a network using a mobile service. The capabilities of the fixed and mobile services may differ, and so user access information is required to be stored on the user's profile to show what sort of access network or AP was used to access the IMS network. This will allow available services to be determined depending on the user's profile and the capabilities of the AP or the access network.

Mechanisms are available for providing access information to the HSS. One such method is for User Equipment to obtain the Media Access Control (MAC) address of the AP and include this in a SIP REGISTER message. The MAC address can then be used to identify the user's location to the HSS. However, this approach requires signalling in addition to sending a SIP REGISTER message in order to obtain the MAC address of the AP.

The publication "Enable service execution in IMS based on Access Network type", MOTOROLA (IP.com number IPCOM000136021D) published May 3, 2006 and WO2006/100459 A2 disclose methods for controlling access to IMS service.

### Summary of the Invention

When a user accesses an IP Multimedia Subsystem network, the User Equipment (UE) includes a P-Access-Network-Info (PANI) header in each message sent during a registration procedure, for example a SIP REGISTER message (see ETSI ES 283 003 V1.1.1). The PANI header is a 3GPP-defined header and indicates to the IMS network over which access technology the UE is attached to the IMS, and also the location of the user. Presently, the PANI may be sent from the UE to a Call Session Control Function (CSCF), or alternately, for some access, the Proxy CSCF adds the location based on local knowledge.

The inventors of the present invention have realised that by forwarding access information from the PANI, or the entire contents of the PANI itself, to the Home Subscriber Server, a persistent record of the access information for a session can be stored in the user profile, and this information can be used to control access to the network depending on the access information, or to determine the services available to the user based on the capabilities of the access network technology and location used (referred to as access information).

According to a first aspect of the present invention, there is provided a method of controlling access to services of an IP Multimedia Subsystem according to claim 1.

It is preferred that the message is a SIP REGISTER message.

In a preferred embodiment of the invention, the method further comprises verifying the P-Access-Network-Info header or the access information obtained therefrom. The verifying step may comprise comparing the P-Access-Network-Info header or the access information obtained therefrom with a range of the P-Access-Network-Info headers that may be used by the Call Session Control Function. Alternatively, the verifying step may comprise obtaining location information from a mobile location register function and comparing the obtained location information with access information obtained from the P-Access-Network-Info header.

There is also provided a method of controlling access to services of an IP Multimedia Subsystem by a user, based upon the user's location, the method comprising:
providing access information to a Home Subscriber Server using the method described above;
comparing location information obtained from the access information with authorisation information stored on a database, the authorisation information comprising information identifying prohibited and/or allowed access locations for the user; and
dependent upon the result of the comparison, allowing or denying access to the IP Multimedia Subsystem services.

In addition, there is provided a method of determining services available to a user from an Application Server based upon the user's access information, the method comprising:
providing access information to a Home Subscriber Server using the method described above;
transmitting the access information from the Home Subscriber Server to the Application Server; and
comparing the access information with the available services and, on the basis of the comparison, determining which services to make available to the user.

Furthermore, there is provided a method of filtering a user profile in an IP Multimedia Subsystem network based upon the user's access information, the method comprising:
providing access information to a Home Subscriber Server using the method described above;
at the Home Subscriber Server, filtering the user profile based upon the access information.

There is provided a method of providing a user profile to a Call Session Control Function comprising:
filtering the user profile using the method described above; and
delivering the filtered user profile to the Call Session Control Function.

According to a second aspect of the present invention, there is provided a Interrogating Call Session Control Function for use in an IP Multimedia Subsystem according to claim 9.

According to a third aspect of the present invention, there is provided a Home Subscriber Server for use in an IP Multimedia Subsystem according to claim 10.

It is preferred that the Home Subscriber Server further comprises means to update a user profile with the received contents.

### Brief Description of the Drawings

Figure 1 illustrates schematically an IP Multimedia Subsystem;
Figure 2 illustrates a signalling sequence for attempted registration from a non-allowed Access Point;
Figure 3 illustrates a signalling sequence for obtaining access information from a Home Subscriber Server;
Figure 4 illustrates a signalling sequence for notifying a Call Session Control Function of the user's access information; and
Figure 5 illustrates schematically a known example of a set of IP Multimedia Private and Public User Identities associated with an IP Multimedia Subsystem subscription.

### Detailed Description of the Preferred Embodiments

As described above, a P-Access-Network-Info (PANI) header may be generated at the user's User Equipment (UE) and incorporated in each message sent by the UE, or alternatively the PANI header is added to a message by the Proxy-CSCF (P-CSCF). The information contained in the PANI header is shown in Table 1. The PANI header includes information identifying the type of access network (e.g. 3GPP-UTRAN-FDD, 3GPP-GERAN, ADSL etc.) over which the UE is attached to the IMS network, and the location of the user.

In the case where the UE accesses the IMS network via a wireless access network and a Proxy-Call Session Control Function compliant with 3GPP Release 6 specifications, the PANI header is not verified. The IMS network assumes that the UE has inserted the correct access information in the PANI header. On the other hand, where UE accesses the IMS network via a fixed line network, the P-CSCF verifies that the information contained in the PANI header is correct, and if not, replaces the PANI header with the correct PANI header.

When a user attempts to access an IMS network, the UE sends a SIP REGISTER message to the P-CSCF. The SIP REGISTER message includes a PANI header. The P-CSCF, instead of removing the PANI header, allows it to be forwarded to the Interrogating-Call Session Control Function (I-CSCF) within the REGISTER message. In the present invention, the I-CSCF then sends a User Authorisation Request (UAR) message to the Home Subscriber Server (HSS), and includes either the PANI or access information obtained from the PANI in the UAR message.

A UAR message is a standard message sent from the I-CSCF to the HSS that, among other things, requests authorisation for the user. The Augmented Backus-Naur Form (ABNF) command codes for sending this information are as follows, where the "Access-Information" is the new information element:

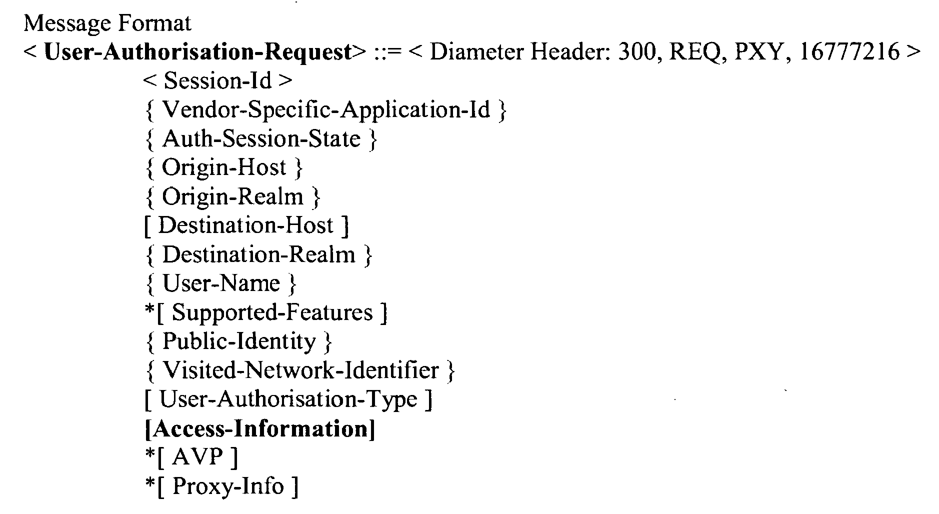

Similarly, other Diameter message exchanges between a S-CSCF and the HSS, and between an Application Server (AS) and the HSS can be extended to include the access information.

As described above, where a user attempts to register via a mobile access network, the PANI header may not be verified before being sent to the HSS. In this case, logic to verify the PANI header is provided to verify the PANI header at the I-CSCF, Serving-CSCF (S-CSCF) or Application Server (AS) that sends the PANI header to the HSS. This logic may be performed by checking if the PANI header can be trusted by checking the P-CSCF used against a configured list. If the PANI header is not trusted, the logic either checks whether the PANI header is within a set of PANI headers that may be used by the P-CSCF, or checks with the mobile location register function and compares the location contained in the PANI header with the location given by the mobile location register function.

Once the PANI header has been received by the HSS, the HSS can store access information in the user profile relating to the access location or access technology used to access the network.

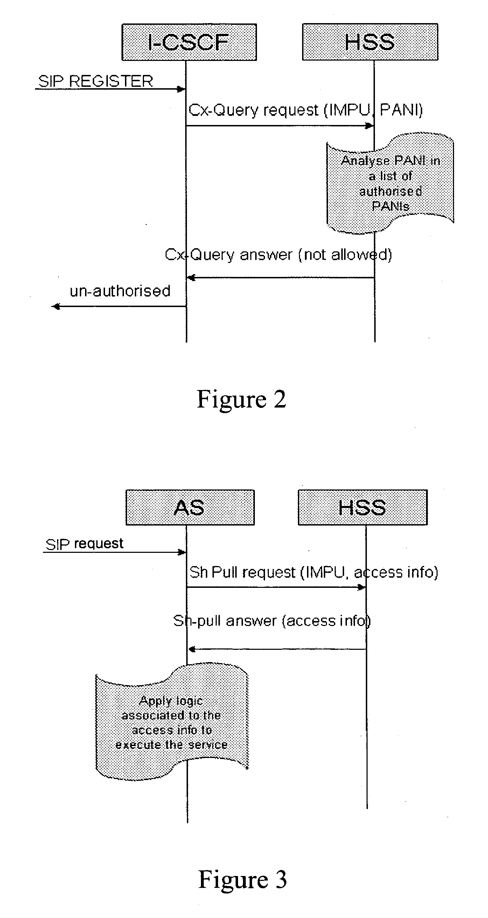

Access information can be used to check whether the user is allowed to register with the IMS network from the access network used. Referring to Figure 2, access authorisation is controlled by the I-CSCF and the HSS. The I-CSCF receives a SIP REGISTER message from User Equipment, the SIP REGISTER message including a PANI header. The I-CSCF sends a Cx-Query request (UAR) containing the PANI header and the user's IP Multimedia Public Identity (IMPU) to the HSS. The HSS compares the PANI received with a stored list of authorised PANIs, and makes a decision on whether or not to allow access based on that comparison. The HSS can control authorisation based on different parameters. For example, the user can be authorised to access the network from one of a plurality of different locations.

By authorising the user via the I-CSCF, certain users, for example those that use only weak authentication methods, can be prevented from accessing the core IMS network. As an example, access can be limited to only access requests that are highly trusted.

In addition, the HSS can dynamically define the Server-Capabilities for S-CSCF selection based on the access used and identified in the PANI.

Another use for the stored access information is in allowing an Application Server (AS) to retrieve user information from the HSS that may be relevant for a particular access. This can allow an AS to tailor the service to a user on the basis of the access information. Referring to Figure 3, the AS receives a SIP INVITE from the UE to access a particular service. The AS sends a Sh-pull message to the HSS. The Sh-pull request includes a value of the Data-Reference AVP for requesting access information stored in the user's profile at the HSS. The HSS receives the Sh-pull message and retrieves the required access information. The access information is included with the Sh-pull answer sent from the HSS to the AS.

Another use of this invention is that the AS can tailor the service provided to the user depending on the access information received. The AS can provide the user access information in a query to the HSS, and the HSS responds with a customized profile for that user based on the user's access information. For example, the access technology used to access the network may place limitations on the type of data that can be included in the service.

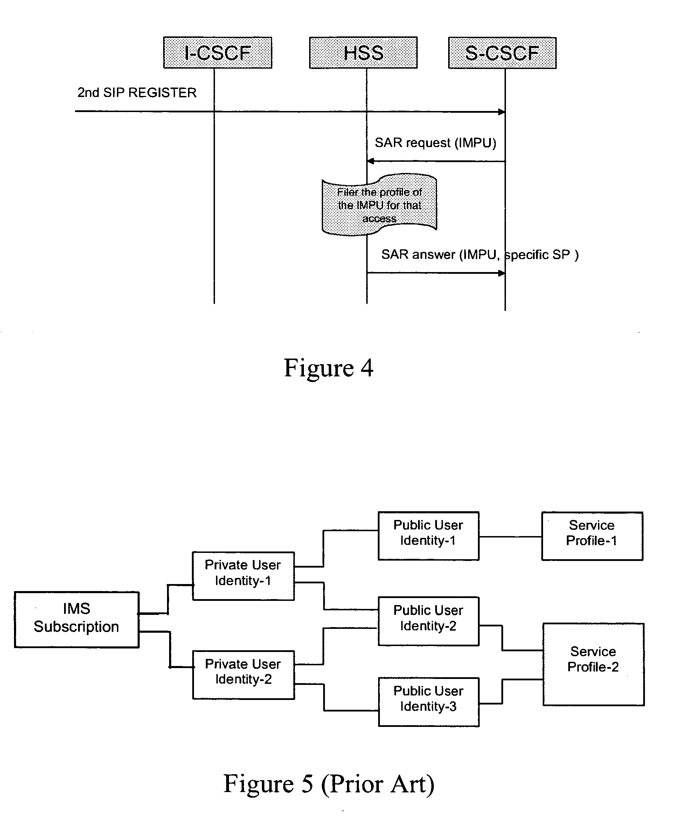

The stored access information can also be used by the HSS to filter the profile required by a user for a given access. For example, if a user registers for a service from a fixed line access, parts of the service that are relevant only to mobile access may be omitted in the profile download. This increases the efficiency of service triggering procedures in the S-CSCF, as the number of triggers that must be evaluated by the S-CSCF are reduced. Other information can be included in the profile, such as time of day and authentication method, in addition to the access information. Referring to Figure 4, a UE sends a SIP REGISTER message to a S-CSCF. The S-CSCF sends a Server Assignment Request (SAR) to the HSS, the SAR containing the user's IP Multimedia Public Identities (IMPU). The HSS filters the profile of the IMPU for that access and returns a SAR answer to the S-CSCF containing a Service profile (SP), including Initial Filter Criteria triggers. S-CSCF uses the SP to tailor the service.

Persistent storage of access information in a user's profile at the HSS can also be used to support multiple identity handling. Referring to Figure 5, there is illustrated schematically a known example of a set of IP Multimedia Private and Public User Identities associated with an IP Multimedia Subsystem subscription. In this example, a user having an IMS subscription has two IP Multimedia Private Identities (IMPIs), IMPI-1 and IMPI-2. IMPI-1 has two IP Multimedia Public User Identities (IMPUs), IMPU-1 and IMPU-2, associated with it. IMPI-2 has one IMPU, IMPU-3 associated with it. IMPU-1 is associated with a first service profile, whereas IMPU-2 and IMPU-3 are each associated with a second service profile. In this example, IMPU-2 can be accessed simultaneously by fixed line access and a mobile access. By providing the HSS with access information, the network is made aware of the access technology used to access the network. This allows, for example, use of different authentication methods for each IMPU, depending on the access information provided to the HSS.

It will be appreciated by persons skilled in the art that various modifications may be made to the embodiments described above without departing from the scope of the present invention.

**TABLE 1**

| | | | |
|---|---|---|---|
| P-Access-Network-Info = | | | "P-Access-Network-Info" HCOLON |
| | | | access-net-spec * (COMMA access-net-spec) |
| access-net-spec | | | = access-type * (SEMI access-info) |
| access-type | | | = "IEEE-802.11" / "IEEE-802.11a" / "IEEE- |
| | | 802.11b" / "IEEE-802.11g" / "3GPP-GERAN" / | |
| | | "3GPP-UTRAN-FDD" / "3GPP-UTRAN-TDD" / "ADSL" / | |
| | | "ADSL2" / "ADSL2+" / "RADSL" / "SDSL" / "HDSL" / | |
| | | "HDSL2" / "G.SHDSL" / "VDSL" / "IDSL" / "3GPP2- | |
| | | 1X" / "3GPP2-1X-HRPD" /token | |
| access-info | | | = cgi-3gpp / utran-cell-id-3gpp / dsl- |
| | location / np / ci-3gpp2/ extension- access-info | | |
| extension-access-info | | | = gen-value |
| cgi-3gpp | | | = "cgi-3gpp" EQUAL (token / quoted-string) |
| utran-cell-id-3gpp | | | = "utran-cell-id-3gpp" EQUAL (token / |
| | quoted-string) | | |
| dsl-location | | | = "dsl-location" EQUAL (token / quoted- |
| | string) | | |
| np | | | = "network-provided" |
| ci-3gpp2 | | | = "ci-3gpp2" EQUAL (token / quoted-string) |

## Claims

1. A method of controlling access to services of an IP Multimedia Subsystem network based upon a user's location, the method comprising:
transmitting a message from User Equipment to an Interrogating-Call Session Control Function, the message including a P-Access-Network-Info header;
transmitting access information comprising location information contained in the P-Access-Network-Info header from the Interrogating-Call Session Control Function to a Home Subscriber Server,
at the Home Subscriber Server, storing the received access information;
at the Home Subscriber Server, comparing the received location information obtained from the access information with authorisation information stored at a database, the authorisation information identifying prohibited and/or allowed access locations for the user; and
dependent upon the results of the comparison, allowing or denying access to the IP Multimedia Subsystem network.

2. The method according to claim 1, wherein the message is a SIP REGISTER message.

3. The method according to claim 1 or 2, comprising verifying the P-Access-Network-Info header or the access information obtained therefrom.

4. The method according to claim 3, wherein the verifying step comprises comparing the P-Access-Network-Info header or the access information obtained therefrom with a range of the P-Access-Network-Info headers that may be used by the Interrogating-Call Session Control Function.

5. The method according to claim 3, wherein the verifying step comprises obtaining location information from a mobile location register function and comparing the obtained location information with access information obtained from the P-Access-Network-Info header.

6. The method according to any one of claims 1 to 5, the method further comprising:
transmitting the access information from the Home Subscriber Server to an Application Server; and
comparing the access information with the available services and, on the basis of the comparison, determining which services to make available to the user.

7. The method according to any one of claims 1 to 5, the method further comprising, at the Home Subscriber Server, filtering a user profile based upon the access information.

8. The method according to claim 7, further comprising delivering the filtered user profile to the Interrogating-Call Session Control Function.

9. An Interrogating-Call Session Control Function for use in an IP Multimedia Subsystem comprising:
input means for receiving a message sent from User Equipment, the message comprising a P-Access-Network-Info header; and
output means for sending to a Home Subscriber Server part or all of the contents of the P-Access-Network-Info header.

10. A Home Subscriber Server for use in an IP Multimedia Subsystem comprising:
input means for receiving part or all of the contents of a P-Access-Network-Info header sent from an Interrogating-Call Session Control Function;
storage means for storing said contents of the P-Access-Network-Info header; and
comparing means for comparing location information contained in the access information with authorisation information stored at a database, the authorisation information identifying prohibited and/or allowed access locations for the user.

11. The Home Subscriber Server for use in an IP Multimedia Subsystem as claimed in claim 10, further comprising means to update a user profile with the received contents.

## Patentansprüche

1. Verfahren zur Zugangssteuerung zu Diensten eines IP-Multimedia-Subsystemnetzes auf der Basis eines Teilnehmerstandorts, wobei das Verfahren umfasst:
Übertragen einer Nachricht vom Teilnehmergerät an eine I-CSCF(Interrogating-Call Session Control Function, Abfrage-Anrufsitzungssteuerfunktion), wobei die Nachricht einen PANI(P-Access-Network-Info)-Header enthält;
Übertragen von Zugangsinformation, Standortinformation umfassend, die im PANI-Header von der I-CSCF an einen Heimatteilnehmerserver enthalten ist;
Speichern der empfangenen Zugangsinformation am Heimatteilnehmerserver;
Vergleichen der empfangenen Standortinformation, die aus der Zugangsinformation mit Autorisationsinformation gewonnen wird, die auf einer Datenbank gespeicherten ist, am Heimatteilnehmerserver, wobei die Autorisationsinformation verbotene und/oder erlaubte Zugangsstandorte für den Teilnehmer identifiziert; und
in Abhängigkeit von den Ergebnissen des Vergleichs das Erlauben oder Verweigern von Zugang zum IP-Multimedia-Subsystemnetz.

2. Verfahren nach Anspruch 1, worin die Nachricht eine SIP(Session Initiation Protocol)-REGISTER-Nachricht ist.

3. Verfahren nach Anspruch 1 oder 2, das Verifizieren des PANI-Headers oder der daraus gewonnenen Zugangsinformation umfassend.

4. Verfahren nach Anspruch 3, worin der Verifikationsschritt das Vergleichen des PANI-Headers oder der daraus gewonnen Zugangsinformation mit einer Reihe der PANI-Header umfasst, die von der I-CSCF verwendet werden können.

5. Verfahren nach Anspruch 3, worin der Verifikationsschritt das Gewinnen von Standortinformation aus einer MLR(Mobile Location Register, Mobilstandortregister)-Funktion und Vergleichen der gewonnenen Standortinformation mit aus dem PANI-Header gewonnener Zugangsinformation umfasst.

6. Verfahren nach einem der Ansprüche 1 bis 5, das Verfahren außerdem umfassend:
Übertragen der Zugangsinformation aus dem Heimatteilnehmerserver an einen Anwendungsserver; und
Vergleichen der Zugangsinformation mit den verfügbaren Diensten und Bestimmen auf der Basis des Vergleichs, welche Dienste für den Teilnehmer verfügbar zu machen sind.

7. Verfahren nach einem der Ansprüche 1 bis 5, das Verfahren außerdem umfassend, dass am Heimatteilnehmerserver ein Teilnehmerprofil auf der Basis der Zugangsinformation gefiltert wird.

8. Verfahren nach Anspruch 7, außerdem umfassend, dass das gefilterte Teilnehmerprofil an die I-CSCF geleitet wird.

9. I-CSCF zur Verwendung in einem IP-Multimedia-Subsystem, umfassend:
Eingabemittel zum Empfangen einer vom Teilnehmergerät gesendeten Nachricht, wobei die Nachricht einen PANI-Header umfasst; und
Ausgabemittel zum Senden eines Teils oder der Gesamtheit des Inhalts des PANI-Headers an einen Heimatteilnehmerserver.

10. Heimatteilnehmerserver zur Verwendung in einem IP-Multimedia-Subsystem, umfassend:
Eingabemittel zum Empfangen eines Teils oder der Gesamtheit des Inhalts eines von einer I-CSCF gesendeten PANI-Headers;
Speichermittel zum Speichern des Inhalts des PANI-Headers; und
Vergleichsmittel zum Vergleichen von in der Zugangsinformation enthaltener Standortinformation mit auf einer Datenbank gespeicherter Autorisationsinformation, wobei die Autorisationsinformation verbotene und/oder erlaubte Zugangsstandorte für den Teilnehmer identifiziert.

11. Heimatteilnehmerserver zur Verwendung in einem IP-Multimedia-Subsystem nach Anspruch 10, außerdem Mittel umfassend, um ein Teilnehmerprofil mit dem empfangenen Inhalt zu aktualisieren.

## Revendications

1. Procédé destiné à commander un accès à des services d'un réseau de sous-système multimédia IP sur la base de la localisation d'un utilisateur, le procédé comprenant les étapes ci-dessous consistant à :
transmettre un message de l'équipement utilisateur à une fonction de commande de session de communication d'interrogation, le message comportant un entête d'informations de réseau d'accès P « P-Access-Network-Info » ;
transmettre des informations d'accès comprenant des informations de localisation contenues dans l'entête d'informations de réseau d'accès P, de la fonction de commande de session de communication d'interrogation à un serveur d'abonné résidentiel ;
au niveau du serveur d'abonné résidentiel, stocker les informations d'accès reçues ;
au niveau du serveur d'abonné résidentiel, comparer les informations de localisation reçues obtenues à partir des informations d'accès à des informations d'autorisation stockées au niveau d'une base de données, les informations d'autorisation identifiant des localisations d'accès interdites et/ou autorisées à l'utilisateur ; et
en fonction des résultats de la comparaison, accorder ou refuser l'accès au réseau de sous-système multimédia IP.

2. Procédé selon la revendication 1, dans lequel le message est un message de registre de protocole d'ouverture de session « SIP REGISTER ».

3. Procédé selon la revendication 1 ou 2, comportant l'étape consistant à vérifier l'entête d'informations de réseau d'accès P ou les informations d'accès obtenues à partir de celui-ci.

4. Procédé selon la revendication 3, dans lequel l'étape de vérification comporte l'étape consistant à comparer l'entête d'informations de réseau d'accès P ou les informations d'accès obtenues à partir de cet entête à une pluralité d'entêtes d'informations de réseau d'accès P qui peuvent être utilisées par la fonction de commande de session de communication d'interrogation.

5. Procédé selon la revendication 3, dans lequel l'étape de vérification comporte l'étape consistant à obtenir des informations de localisation en provenance d'une fonction d'enregistreur de localisation mobile et l'étape consistant à comparer les informations de localisation obtenues à des informations d'accès obtenues à partir de l'entête d'informations de réseau d'accès P.

6. Procédé selon l'une quelconque des revendications 1 à 5, le procédé comprenant en outre les étapes ci-dessous consistant à :
transmettre les informations d'accès du serveur d'abonné résidentiel à un serveur d'applications ; et
comparer les informations d'accès aux services disponibles et, sur la base de la comparaison, déterminer quels services doivent être mis à la disposition de l'utilisateur.

7. Procédé selon l'une quelconque des revendications 1 à 5, le procédé comprenant en outre, au niveau du serveur d'abonné résidentiel, l'étape consistant à filtrer un profil utilisateur sur la base des informations d'accès.

8. Procédé selon la revendication 7, comprenant en outre l'étape consistant à délivrer le profil utilisateur filtré à la fonction de commande de session de communication d'interrogation.

9. Fonction de commande de session de communication d'interrogation destinée à être utilisée dans un sous-système multimédia IP comprenant :
un moyen d'entrée pour recevoir un message envoyé par l'équipement utilisateur, le message comprenant un entête d'informations de réseau d'accès P ; et
un moyen de sortie pour envoyer à un serveur d'abonné résidentiel une partie ou la totalité du contenu de l'entête d'informations de réseau d'accès P.

10. Serveur d'abonné résidentiel destiné à être utilisé dans un sous-système multimédia IP comprenant:
un moyen d'entrée pour recevoir une partie ou la totalité du contenu d'un entête d'informations de réseau d'accès P envoyé par une fonction de commande de session de communication d'interrogation ;
un moyen de stockage pour stocker ledit contenu de l'entête d'informations de réseau d'accès P ; et
un moyen de comparaison pour comparer les informations de localisation contenues dans les informations d'accès à des informations d'autorisation stockées au niveau d'une base de données, les informations d'autorisation identifiant des localisations d'accès interdites et/ou autorisées à l'utilisateur.

11. Serveur d'abonné résidentiel destiné à être utilisé dans un sous-système multimédia IP selon la revendication 10, comprenant en outre un moyen pour mettre à jour un profil utilisateur au moyen du contenu reçu.
